Europäisches Patentamt

European Patent Office

Office européen des brevets

(11) Publication number: **0 316 094**
**A2**

# EUROPEAN PATENT APPLICATION

(21) Application number: 88310129.7

(51) Int. Cl.⁴: **C22B 11/04**

(22) Date of filing: 27.10.88

(30) Priority: 07.11.87 GB 8726158

(43) Date of publication of application:
17.05.89 Bulletin 89/20

(84) Designated Contracting States:
**ES FR GB**

(71) Applicant: **The British Petroleum Company p.l.c.**
**Britannic House Moor Lane**
**London EC2Y 9BU(GB)**

(72) Inventor: **Lulham, Jonathan Paul**
**The British Petroleum Company p.l.c.**
**Chertsey Road**
**Sunbury-on-Thames Middlesex TW16 7LN(GB)**

(74) Representative: **Dodding, Robert Anthony et al**
**BP INTERNATIONAL LIMITED Patents Division Chertsey Road**
**Sunbury-on-Thames Middlesex, TW16 7LN(GB)**

(54) **Separation process.**

(57) A process for separating gold or other precious metals from arsenopyrite or pyrite ores. The ore is treated with an alkaline solution under oxygenated conditions to break up the sulphide matrix. The ore is arranged to have an initial base: sulphide sulphur stoichiometry of between 0.6:1 to 1.0:1 to maximise the solubilisation of gold or other precious metals. The metals are then extracted from the resultant solution.

EP 0 316 094 A2

# SEPARATION PROCESS

The present invention relates to a process for the separation of gold or other precious metals from ores and associated materials which may be refractory.

It is common for gold or precious metals to be separated from their ores by treatment with cyanide solutions, the metal forming a soluble complex with the cyanide and being subsequently extracted from solution. However, certain gold-bearing ores (referred to generally as 'refractory') are not amenable to cyanidation resulting in low or no gold dissolution. One reason for an ore being refractory is that the gold is occluded within the sulphide matrix and not available for leaching with cyanide. This occurs most frequently with pyritic and arsenopyritic ores. Furthermore, in some cases cyanidation is a costly technique and not suitable for certain ore types and locations. Also cyanides are highly toxic and their use can cause environmental problems.

The principal cyanide extraction processes for refractory ores are (a) roasting of the ground ore followed by cyanidation and (b) acid pressure leaching of the ore which usually involves treatment of the ground ore with sulphuric acid and oxygen at about 200°C followed by cyanidation of the neutralised residue. The present invention provides an improved precious metal extraction process under alkaline conditions which avoids or reduces some of the disadvantages of the prior art processes such as roasting and cyanidation.

Thus according to the present invention there is provided a process for separating gold or other precious metals from arsenopyrite or pyrite ores and associated materials comprising the steps of (a) treating the ore with an alkaline solution and bubbling an oxygen containing gas through the mixture to break up the sulphide matrix, (b) the ore having an initial base:sulphide sulphur stoichiometry of between 0.6:1 to 1.0:1 so as to maximise the solubilisation of gold or other precious metals, and (c) extracting the gold or other precious metals from the resultant solution. It is desirable that after completion of steps (a) and (b) that the solution has a neutral pH, i.e. about 7.

The alkaline solution may be sodium hydroxide, potassium hydroxide, potassium carbonate, sodium carbonate, ammonium hydroxide or mixtures of the aforesaid compounds. The temperature, pressures and leach times used for the process are dependent on the particular ore being treated. Thus arsenopyritic ores are preferably treated with alkaline solution at 70-90°C and atmospheric pressure for several hours but pyrite ores may require temperatures of up to 150°C and oxygen overpressures of 600kPa though much shorter leach times.

It is possible to treat a refractory ore such as an arsenopyrite ore or pyrite ore with alkaline solution in order to break up the sulphide matrix and release the particulate gold. The gold may then be separated from the residue by cyanidation. However, in the present invention it has been surprisingly found that, under certain conditions of alkaline treatment the released gold rather than forming part of the solid residue tends to be solubilised. In other words by closely controlling the conditions, the gold may be put into an extractable form by use of a one stage process rather than a two stage process i.e. pretreatment to break up the sulphide matrix followed by cyanidation to solubilise the gold.

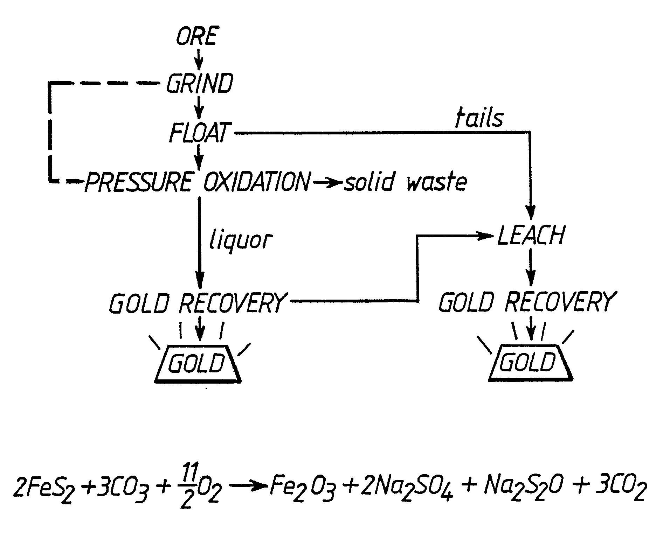

The invention will now be described by way of example only. The figure shows a schematic diagram of the process according to the invention.

The feed material used in the separation process was a pyritic gold concentrate from a South East Asian mine. The concentrate contained about 45% pyrite and 15.3 grams per tonne of gold. The details of the concentrate are shown in Table 1. The assay and analysis of the sample showed about 45% pyrite with about 50% orthoclase and residue.

The experiments were carried out in batch mode in a titanium autoclave supplied by Baskerville and Lindsay. The pyritic gold concentrate (50 g) and sodium carbonate solution (500 ml) were added to the autoclave body, the autoclave then being assembled and pressurised. The reactants were then stirred with an impeller and heated to about 150°C. The reactants were sparged with oxygen. the vent system operating continuously at 0.5 litre per minute while maintaining a constant pressure by controlled oxygen flow.

At completion of the leach, the contents of the autoclave were flash discharged. The slurry was filtered and the residue washed with distilled water. the washings being added to the filtrate. The resultant solution was analysed for gold, thiosulphate ion and sulphate ion. The residue was weighed and analysed for total sulphur content. The percentage gold extraction and pyrite decomposition may be calculated by solution and residue analyses

The overall stoichiometric reaction is believed to be:-

2

$$2FeS_2 + 4Na_2CO_3 + 15:2\ O_2 \longrightarrow Fe_2O_3 + 4Na_2SO_4 + 4\ CO_2$$

Thus 2 moles of $FeS_2$ are equivalent to 4 moles of $Na_2CO_3$ and 1 kg of $FeS_2$ is equivalent to 1.767 kg of $Na_2CO_3$. Thus, 1 tonne of pyritic concentrate (containing 476 kg of $FeS_2$ - determined by assay) is equivalent to 841 kg of $Na_2CO_3$.

The calculated head is the ratio of the total of the weight of gold in solution and weight of gold in solid to the initial weight of solid.

A series of experiments was carried out in which the base stoichiometry was varied for the following baseline conditions, a leach time of 60 minutes, a temperature of 150°C, an oxygen overpressure of 6 bar (equivalent to 600 kPa), (Table 2). Tables 3 to 6 show the varying effects on sulphur conversion and gold dissolution of time, temperature, oxygen overpressure and base stoichiometry.

The gold and/or silver may be extracted from the resultant liquor either by use of a suitable ion exchange resin such as a strong or weak base resin, eg polystyrene or polymethylmethacrylate resins or by addition of zinc powder in the absence of oxygen. Alternative methods of extracting precious metal from the liquor may also be used.

Table 2 shows that base stoichiometry has a marked effect on gold extraction. The terminal pH in the autoclave is controlled by base addition at the beginning of the extraction. It is believed that low base concentrations result in oxidation of the thiosulphate ion and the gold thiosulphate complex formed. A base concentration which is too high results in minimal gold dissolution, as the terminal pH is outside the optimum range for gold dissolution by thiosulphate ion.

Table 3 shows the effect of pulp density (weight of solid/[weight of solid + weight of solution] x 100%). Optimum results for gold extraction were obtained at pulp densities greater than 4.

Table 4 shows the effect of oxygen overpressure. Increasing oxygen overpressure marginally tends to increase the gold extraction.

Table 5 shows that at temperatures of greater than 150°C, the gold extraction decreases markedly. This is believed to be caused by gold precipitation from solution due to oxidation of the gold thiosulphate complex and thiosulphate ion.

Table 6 shows the effect of residence time. For residence times of over 70 minutes at 150°C the gold dissolution fell markedly. This is probably caused by oxidation of thiosulphate ion and gold thiosulphate complex.

Table 7 shows a further set of results illustrating the effect of base stoichiometry on gold extraction from a pyritic gold concentrate from a Canadian mine. The concentrate contained about 80.1% pyrite and 8.5 grams per tonne of gold. The conditions for the reactions were similar to the above concentrate and were a leach time of 30 minutes, a temperature of 130°C, and an oxygen overpressure of 8 bar (equivalent to 800 kPa).

TABLE 1

| GOLD CONCENTRATE | |
|---|---|
| By Assay | |
| Gold<br>Silver<br>Total Sulphur content<br>Sulphate ion<br>Elemental sulphur<br>Total carbon<br>Carbonate ion | 15.3 g/tonne of concentrate<br>less than 5 g/tonne of concentrate<br>25.4% by weight equivalent to 47.6% pyrite $FeS_2$.<br>0.9%<br>less than 0.01%<br>less than 0.1%<br>0.02% |
| By Atomic Absorption Spectroscopy | |
| Fe 20.10% (equivalent to 42.9% pyrite $FeS_2$), As 0.4%, Si 13.3%, K 4.9%, Al 5.1%. | |
| By X-Ray Fluorescence | |
| S 23%, Fe 21%, Si 19%, K 8.9%, Al 6.6%, Pb 1.3%, Mg 1.2%, Ti 0.4%, Ca 0.3%, P 0.3%, Mo 0.1%. | |
| By X-Ray Diffraction | |
| Mainly pyrite and a feldspar (orthoclase) with traces of kaolinite and muscovite. | |

TABLE 2

| Base Stoichiometry | kg Na$_2$CO$_3$ added/tonne of concentrate | kg Na$_2$CO$_3$ used/tonne of concentrate | Gold Dissolution % | Calculated Head g/t | % pyrite to Sulphate to Conversion | kg thiosulphate produced/tonne concentrate | Final pH |
|---|---|---|---|---|---|---|---|
| 0.700 | 586 | 583 | 20.4 | 15.1 | 81.2 | 8.65 | 7.4 |
| 0.725 | 607 | 601 | 55.7 | 15.0 | 82.4 | 9.68 | 7.8 |
| 0.775 | 649 | 641 | 84.3 | 15.5 | 86.3 | 14.1 | 8.3 |
| 0.800 | 669 | 644 | 87.8 | 14.6 | 88.7 | 22.0 | 10.3 |
| 0.825 | 690 | 664 | 89.1 | 14.8 | 88.1 | 23.2 | 10.0 |
| 0.850 | 711 | 652 | 64.0 | 15.0 | 89.8 | 19.8 | 10.2 |
| 0.875 | 732 | 627 | 47.7 | 14.3 | 88.6 | 13.4 | 10.2 |
| 0.900 | 763 | 642 | 58.6 | 14.5 | 89.1 | 14.4 | 10.0 |

6.0 bar oxygen overpressure

60 mins residence time

150°C

Charge = 50g concentrate + 500ml sodium carbonate solution

TABLE 3

| Pulp Density % wt | kg Na$_2$CO$_3$ used/tonne concentrate | Sulphur Conversion % | Gold Dissolution % | Calculated Head g/t Av | kg thiosulphate produced/tonne concentrate |
|---|---|---|---|---|---|
| 2.4 | 667 | 84.0 | 11.0 | 20.1 | 1.47 |
| 4.8 | 659 | 89.1 | 87.9 | 16.4 | 50.8 |
| 9.1 | 644 | 86.6 | 87.8 | 14.6 | 22.0 |
| 13.0 | 604 | 81.5 | 85.1 | 14.9 | 22.0 |

Conditions:- 6.0 bar oxygen overpressure

60 mins residence time

150° C

669 kg sodium carbonate/tonne concentrate

Charge = 50g concentrate + 500ml sodium carbonate solution

TABLE 4

| Oxygen Overpressure bar | kg Na$_2$CO$_3$ used/tonne concentrate | Sulphur Conversion % | Gold Dissolution % | Calculated Head g/t | kg thiosulphate produced/tonne concentrate |
|---|---|---|---|---|---|
| 3.0 | 626 | 83.2 | 78.6 | 16.2 | 38.1 |
| 4.0 | 641 | 86.6 | 85.3 | 15.8 | 48.1 |
| 5.0 | 651 | 86.3 | 91.1 | 15.3 | 39.7 |
| 6.0 | 644 | 86.6 | 87.8 | 14.6 | 22.0 |
| 7.0 | 662 | 86.6 | 91.1 | 15.6 | 26.6 |

Conditions:- 150° C

60 mins residence time

669 kg sodium carbonate/tonne concentrate

Charge = 50g concentrate + 500ml sodium carbonate solution

TABLE 5

| Temperature °C | kg Na$_2$CO$_3$ used/tonne concentrate | Sulphur Conversion % | Gold Dissolution % | Calculated Head g/t | kg thiosulphate produced/tonne concentrate |
|---|---|---|---|---|---|
| 135 | 543 | 80.8 | 86.5 | 15.2 | 60.8 |
| 140 | 577 | 85.1 | 86.3 | 15.8 | 59.0 |
| 145 | 635 | 85.9 | 87.8 | 15.7 | 56.4 |
| 150 | 644 | 86.6 | 87.8 | 14.6 | 22.0 |
| 160 | 669 | 87.3 | 12.4 | 15.1 | 1.6 |
| 165 | 669 | 86.7 | 2.9 | 14.0 | 0.6 |

Conditions:- 6.0 bar O$_2$ overpressure

60 mins residence time

669 kg sodium carbonate/tonne concentrate

Charge 50g concentrate + 500ml sodium carbonate solution

TABLE 6

| Residence Time (Mins) | kg Na$_2$CO$_3$ used/tonne concentrate | Sulphur Conversion % | Gold Dissolution % | Calculated Head g/t | kg thiosulphate produced/tonne concentrate |
|---|---|---|---|---|---|
| 45 | 598 | 80.9 | 87.2 | 15.4 | 49.5 |
| 50 | 624 | 85.2 | 87.0 | 15.2 | 27.1 |
| 55 | 639 | 86.6 | 84.5 | 14.4 | 26.8 |
| 60 | 644 | 86.6 | 87.8 | 14.6 | 22.0 |
| 65 | 662 | 88.0 | 85.2 | 15.6 | 15.0 |
| 70 | 659 | 89.5 | 87.0 | 14.4 | 10.8 |
| 75 | 661 | 88.4 | 54.6 | 14.6 | 7.7 |

Conditions:- 6.0 bar O$_2$ overpressure

669 kg sodium carbonate/tonne concentrate

150°C

Charge = 50g concentrate + 500ml sodium carbonate solution

TABLE 7

| Base Stoichiometry | kg.Na$_2$CO$_3$/tonne of concentrate | Sulphur Conversion % | Gold Dissolution % | kg/t of thiosulphate formed/tonne of pyrite concentrate | Final pH |
|---|---|---|---|---|---|
| 0.2 | 288 | 54.6 | 13.1 | 44.5 | 2.2 |
| 0.4 | 576 | 73.3 | 12.0 | 15.4 | 2.8 |
| 0.5 | 720 | 80.0 | 5.0 | 13.1 | 3.0 |
| 0.6 | 864 | 86.5 | 74.0 | 18.3 | 7.4 |
| 0.7 | 1008 | 92.8 | 48.5 | 38.4 | - |
| 0.8 | 1152 | 93.8 | 65.7 | 16.0 | 9.6 |
| 1.0 | 1440 | 85.7 | 28.8 | 3.0 | 9.7 |

**Claims**

1. A process for separating gold or other precious metals from arsenopyrite or pyrite ores and associated materials comprising the steps of (a) treating the ore with an alkaline solution and bubbling an oxygen containing gas through the mixture to break up the sulphide matrix (b) the ore having an initial base: sulphide sulphur stoichiometry of between 0.6:1 to 1.0:1 so as to maximise the solubilisation of gold or other precious metals and (c) extracting the gold or other precious metals from the resultant solution.

2. A process according to claim 1 in which the alkaline solution is sodium hydroxide, potassium hydroxide, potassium carbonate, sodium carbon, ammonium hydroxide or mixture thereof.

3. A process according to claim 1 or claim 2 in which the temperature of the process is from 70°C to 150°C.

4. A process according to any of the preceding claims in which the resultant solution has a substantially neutral pH.

5. A process according to any of the preceding claims in which the oxygen overpressure is from 0 to 7 bar.

6. A process according to any of the preceding claims in which the initial base:sulphide sulphur stoichiometry is from 0.725 to 0.850.

7. A process according to any of the preceding claims in which the pulp density is greater than 4 wt %.

ORE
↓
GRIND
↓
FLOAT —————————————— tails
↓
PRESSURE OXIDATION → solid waste
↓ liquor                                    → LEACH
↓                                              ↓
GOLD RECOVERY ————————————          GOLD RECOVERY
\ ↓ /                                          \ ↓ /
/GOLD\                                         /GOLD\

$$2FeS_2 + 3CO_3 + \frac{11}{2}O_2 \longrightarrow Fe_2O_3 + 2Na_2SO_4 + Na_2S_2O + 3CO_2$$